# FASCICULE DE BREVET EUROPEEN

(11) **EP 0 559 592 B1**
(45) Date de publication et mention de la délivrance du brevet: **11.10.1995**
(21) Numéro de dépôt: 93440026.8
(22) Date de dépôt: 01.03.1993
(51) Int. Cl.: F16L 55/162

(54) **Dispositif de réparation in situ de conduits ou de canalisations non visitables et procédé de réhabilitation mettant en oeuvre ledit dispositif**
Vorrichtung zur In-situ-Sanierung von nichtbegehbaren Rohrleitungen oder Kanälen und Verfahren zur Wiederherstellung mit Hilfe dieser Vorrichtung
Device for the repair in-situ of inaccessible conduits or ducts and method for restoration using the said device

(30) Priorité: 06.03.1992 FR 9202875
(43) Date de publication de la demande: 08.09.1993
(73) Titulaire: Frey, André, F-67100 Strasbourg (FR)
(72) Inventeur: Frey, André, F-67100 Strasbourg (FR)
(74) Mandataire: Nuss, Pierre

(56) Documents cités:
- DE-U- 9 109 334
- FR-A- 2 579 294
- GB-A- 16 950
- GB-A- 2 171 486
- US-A- 3 356 777
- US-A- 3 958 607

## Description

La présente invention concerne le domaine de la réfection de conduits et de canalisations non accessibles directement de l'extérieur et non visitables de l'intérieur car d'un diamètre trop faible, et a pour objet un dispositif de réparation in situ de conduits ou de canalisations non visitables, ainsi qu'un procédé de réhabilitation mettant en oeuvre ledit dispositif.

Les défauts d'étanchéité de canalisations et de conduits enterrés d'amenée ou d'évacuation de liquides, sous la forme de fissures, de fentes, de jointoiements défectueux ou autres, entraînent souvent des problèmes graves de pollution et de contamination, soit du sous-sol environnant, soit des liquides transportés, et nécessitent généralement leur mise à jour, d'où résultent des travaux de voirie longs et fastidieux.

Il existe, certes, des dispositifs de réhabilitation in situ de canalisations ou de conduits non visitables, par injection de produit colmatant, notamment sous la forme d'un ou de plusieurs modules de forme cylindrique et de diamètre variable introduits dans la canalisation ou le conduit à réhabiliter, et tractés dans celui-ci.

Néanmoins, de tels dispositifs ne peuvent réhabiliter que des tronçons de canalisation et de conduits situés entre deux regards, le premier regard servant à l'introduction du dispositif et le deuxième à sa traction au moyen d'un câble ou d'une chaîne de tirage, et de plus, il n'est pas possible de les mettre en oeuvre dans des conduits présentant des déboîtements ou des saillies internes importantes.

On connaît également d'autres dispositifs, tel que celui décrit dans le brevet FR-2 579 294, qui ne sont adaptés qu'à des conduits ou des canalisations ayant un diamètre assez important et compris dans une plage de valeurs assez restreinte. Leur modification structurelle éventuelle en vue d'élargir leur possibilité d'utilisation à des canalisations ou des conduits ayant des diamètres variables est longue est fastidieuse, du fait de leur constitution complexe.

De plus, les deux types de dispositifs précités, composés d'éléments rigides de longueurs relativement importantes ne peuvent en aucun cas être mis en oeuvre dans des conduits ou des canalisations présentant des déboîtements, des saillies internes ou des coudes importants.

Enfin, le document US-A-4 429 720 décrit un corps tubulaire souple, d'un seul tenant, comportant une partie avant et une partie arrière gonflables, délimitant entre eux une chambre d'injection de produit pour la réparation de canalisations et de conduits.

Toutefois, ledit corps doit être positionné exactement à l'endroit où la réparation doit être effectuée, endroit repéré par injection préalable d'air sous pression. Le produit de colmatage et le catalyseur sont ensuite injectés séparément dans la chambre vide délimitée par les parties gonflables et dès que la réparation est achevée le corps tubulaire doit à nouveau être extrait et nettoyé pour la réparation suivante.

Par ailleurs, ledit corps tubulaire nécessite, pour sa mise en oeuvre, la présence de deux regards d'accès et ne peut en aucun cas progresser dans un conduit comportant des obstacles saillants intérieurs, sa vitesse de déplacement étant, en outre, très faible du fait du mode d'avancement utilisé.

Enfin, par le document US-A-3 958 607, on connaît un appareil du type décrit dans le préambule de la revendication 1.

Toutefois, cet appareil ne permet pas de réaliser une réparation en continu des conduits, mais uniquement des réparations ponctuelles et localisées, lesdits manchons devant être dégonflés lors de chaque déplacement de l'appareil et ne pouvant, par conséquent, pas conserver une chambre d'injection en permanence.

En outre, les deux manchons composant l'appareil décrit dans ce dernier document, sont reliés entre eux par une chaîne et un tuyau flexible. Cette disposition ne permet pas de transmettre des forces axiales importantes et n'autorise, par conséquent, pas une introduction par poussée dudit appareil, par exemple dans le cas d'un conduit ne présentant qu'une seule ouverture accessible.

La présente invention a notamment pour but de pallier l'ensemble des inconvénients précités.

A cet effet, elle a pour objet un dispositif de réparation in situ de conduits ou de canalisations non visitables, avec accès unique ou multiple, destiné à appliquer un produit colmatant sur la paroi interne du conduit ou de la canalisation à réparer et comprenant un ensemble d'éléments gonflables pouvant délimiter une chambre d'injection, des moyens d'amenée de fluide de gonflage et de produit colmatant et de moyens de traction et/ou de rétraction, constitué, d'une part, par un ensemble d'au moins quatre éléments cylindriques gonflables, de faibles longueurs, assemblés entre eux par des entretoises articulées au moyen de joints de cardan, d'autre part, par des dispositifs d'injection et d'actionnement disposés en surface et reliés, respectivement, par des moyens d'amenée de fluide de gonflage et de produit colmatant sous pression, ainsi que par des moyens de traction et/ou de rétraction, audit ensemble d'éléments, et, enfin, par des dispositifs de contrôle et de mesure, ledit ensemble d'éléments permettant de délimiter, entre deux de ses éléments, une chambre d'injection permanente de produit colmatant sous pression dans le conduit ou la canalisation, autorisant la réparation complète en continu dudit conduit ou de ladite canalisation au cours de la progression dudit ensemble, ce également, le cas échéant, au niveau de déboîtements, de protubérances internes, d'embouchures de canalisations secondaires ou de coudes, en conservant la chambre d'injection pleine de produit colmatant, les moyens d'amenée de ce dernier étant connectés au niveau de l'élément arrière dudit ensemble d'éléments.

L'invention a également pour objet un procédé tel que défini dans la revendication 9.

L'invention sera mieux comprise grâce à la description ci-après, qui se rapporte à un mode de réalisation préféré, donné à titre d'exemple non limitatif, et expliqué avec référence aux dessins schématiques annexés, dans lesquels:
les figures 1A à 1E représentent respectivement des vues en élévation latérale et en coupe des différents éléments composant le dispositif de réparation conforme à l'invention, et,
les figures 2A et 2D représentent de manière schématique le passage d'un déboîtement par le dispositif de réparation selon l'invention.

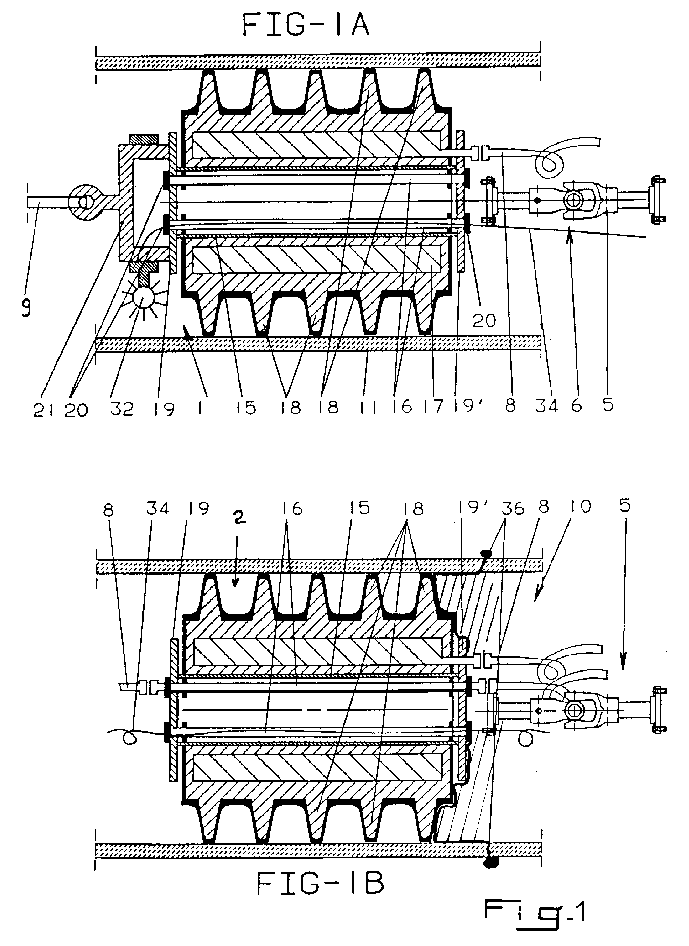

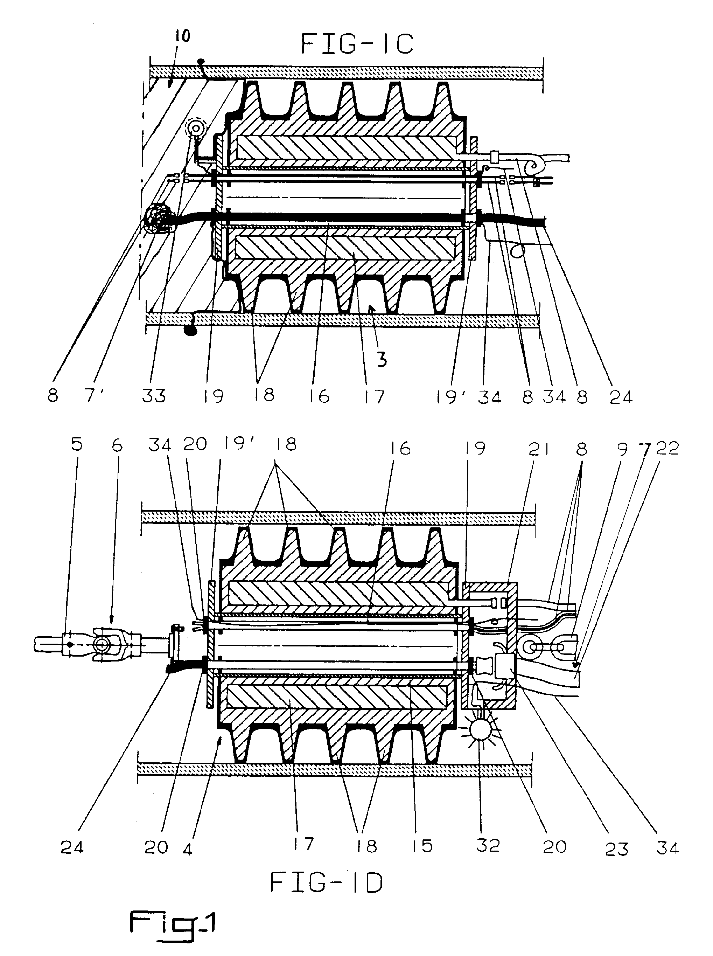

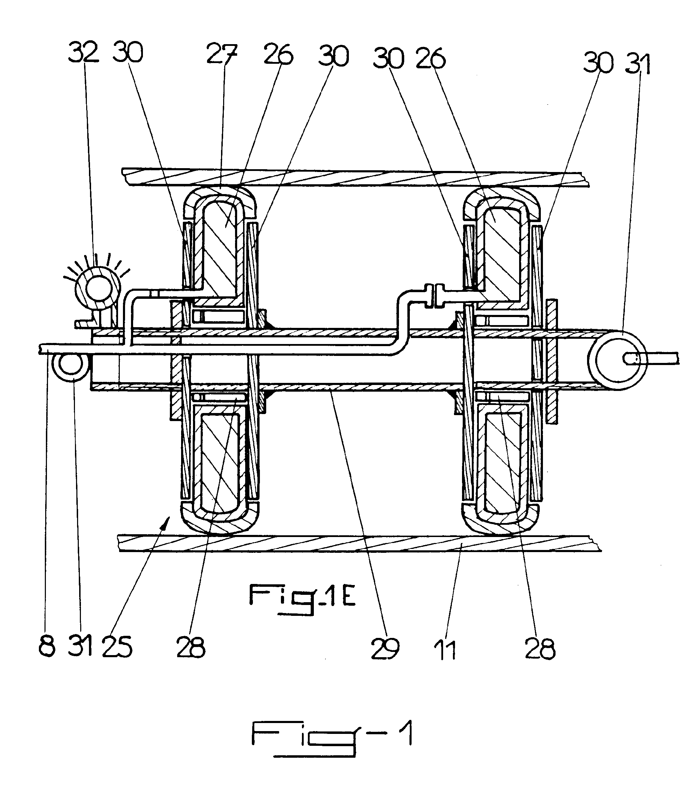

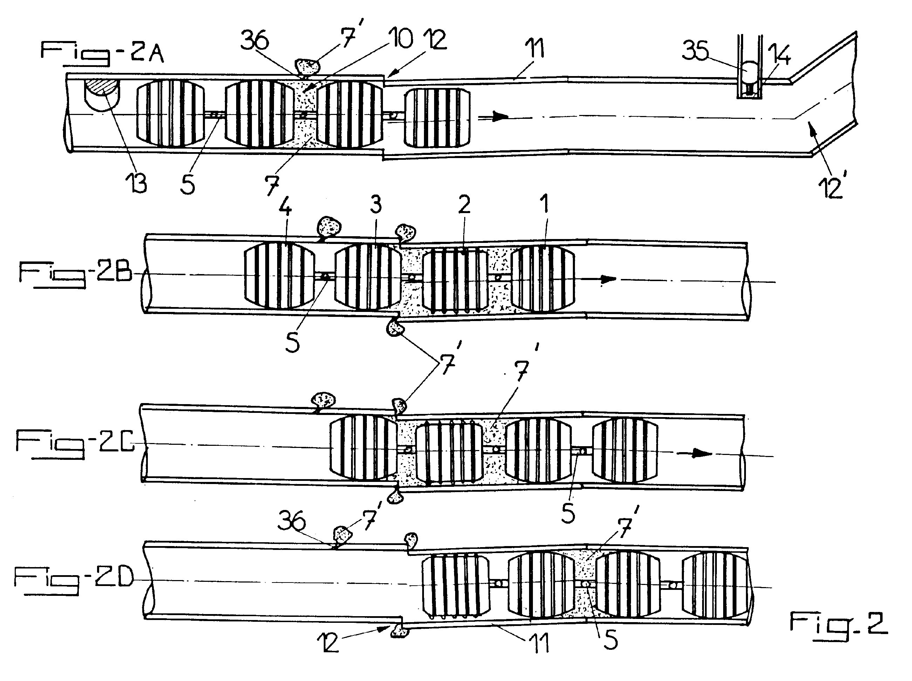

Comme le montrent les figures 1A à 1D et 2A à 2D des dessins annexés, le dispositif de réparation est constitué, d'une part. par un ensemble d'au moins quatre éléments 1, 2, 3, 4 cylindriques gonflables, de faibles longueurs, assemblés entre eux par des entretoises 5 articulées au moyen de joints de cardan 6, d'autre part. par des dispositifs d'injection et d'actionnement disposés en surface et reliés, respectivement, par des moyens d'amenée 7, 8 de fluide de gonflage et de produit colmatant 7′ sous pression, ainsi que par des moyens 9 de traction et/ou de rétraction, audit ensemble d'éléments, et, enfin, par des dispositifs de contrôle et de mesure, ledit ensemble d'éléments 1, 2, 3, 4 permettant de délimiter, entre deux de ses éléments, une chambre d'injection 10 permanente de produit colmatant 7′ sous pression dans le conduit ou la canalisation 11, autorisant la réparation complète en continu dudit conduit ou de ladite canalisation 11 au cours de la progression dudit ensemble, ce également, le cas échéant, au niveau de déboîtements 12, de protubérances internes 13, d'embouchures de canalisations secondaires 14 ou de coudes 12′, en conservant la chambre d'injection 10 pleine de produit colmatant 7′, les moyens d'amenée 7 de ce dernier étant connectés au niveau de l'élément arrière 4 dudit ensemble d'éléments 1, 2, 3 et 4.

Les entretoises articulées 5 précitées permettent, par l'entremise des joints de cardan 6 dont elles sont pourvues, d'une part, de transmettre une force axiale importante, autorisant une introduction de l'ensemble d'éléments gonflants 1, 2, 3 et 4 et une progression de ce dernier dans le conduit ou la canalisation 11 à réparer sous l'effet d'une poussée longitudinale par l'arrière dans le sens de l'introduction, notamment lors du traitement d'une canalisation 11 à un seul regard, et, d'autre part, à chaque élément gonflable 1, 2, 3 ou 4, de pivoter librement dans toutes les directions radiales par rapport aux ou à l'élément 1, 2, 3 ou 4 adjacent, habilitant ledit ensemble d'éléments gonflables 1, 2, 3 et 4 à traverser des coudes présentant des courbures jusqu'à 90°.

Conformément à une première caractéristique de l'invention, représentée aux figures 1A et 1D des dessins annexés, les éléments gonflables 1, 2, 3, 4 de constitutions similaires, sont principalement composés d'un corps support 15 tubulaire dans lequel sont disposés, de manière fixe, plusieurs tuyaux rigides 16 saillant aux deux extrémités dudit corps support 15, ce dernier étant enveloppé d'un manchon annulaire gonflable 17, muni sur sa face externe de rondelles 18 radiales périphériques, et maintenu axialement par l'intermédiaire de deux flasques latéraux 19, 19′, montés sur les extrémités saillantes des tuyaux rigides 16 et assujettis au moyen de pièces de fixation 20 amovibles.

Les rondelles 18 peuvent consister en un matériau élastique, tel qu'un polymère ou un caoutchouc synthétique, et être réalisées d'un seul tenant avec les manchons gonflables 17, leur usure due à leurs frottements contre la paroi pouvant être palliée grâce à des apports de matériau par vulcanisation.

Le changement de manchon annulaire gonflable 17, en vue de l'adaptation du diamètre des éléments gonflables 1, 2, 3 et 4 au diamètre du conduit ou de la canalisation 11 à réparer, peut s'effectuer très simplement et rapidement en démontant un des deux flasques latéraux 19 ou 19′, après enlèvement des pièces de fixation 20, se présentant, par exemple, sous la forme d'écrous.

Les entretoises articulées 5, de longueurs variables, sont préférentiellement fixées, de manière amovible sur les flasques 19, 19′ en regard des éléments gonflables 1, 2, 3 et 4 à interconnecteur, les flasques extérieurs 19 et 19′ des éléments extrêmes 1 et 4 étant pourvues d'attaches 20 pour la fixation du câble 9 ou de la chaîne de traction ou de rétraction, relié à un treuil ou un dispositif similaire disposé en surface, avantageusement à actionnement manuel ou électrique en vue de limiter la nuisance sonore (non représenté).

Selon une caractéristique de l'invention, représentée aux figures 1A et 1D des dessins annexés, les moyens d'amenée 8 de fluide de gonflage se présentent sous la forme de conduits flexibles, raccordés à un dispositif compresseur placé en surface, alimentant, de manière indépendante, chacun des quatre éléments gonflables 1, 2, 3, 4 les moyens d'amenée 7 de produit colmatant 7′, préparé à la surface et prêt à l'emploi, étant constitués par un flexible semi-rigide 22 connecté au moyen d'un raccord rapide 23 à un tuyau rigide 16 correspondant de l'élément gonflable arrière 4, le transfert final du produit colmateur 7′ dans la chambre d'injection 10 s'effectuant consécutivement à travers un flexible de raccordement 24 et un tuyau rigide 16 de l'un des éléments gonflables intermédiaires 2 ou 3, délimitant ladite chambre d'injection 10.

La longueur de cette dernière est directement fonction de la longueur de l'entretoise 5 reliant les deux éléments gonflables 2 et 3, et peut, par conséquent, être adaptée à la taille des défauts d'étanchéité, notamment des fissures 36, à traiter.

La constitution semi-rigide du flexible 7 permet, lorsque le conduit ou la canalisation 11 à colmater n'est pourvu que d'un unique regard, d'introduire l'ensemble d'éléments gonflables 1 à 4 par poussées successives exercées sur ledit flexible 7.

Les conduits flexibles 8 d'amenée de fluide de gonflage, notamment de l'air sous pression, constitués de portions de conduits assemblés entre elles de manière amovible au moyen de raccords, peuvent avantageusement traverser les éléments gonflables 4, 3 ou 2 interposés, au niveau d'un de leurs tuyaux rigides 16.

Le dispositif de préparation et d'injection de produit colmatant 7′, incluant notamment un malaxeur et une pompe, ainsi que le dispositif compresseur d'air pourront avantageusement être installés sur ou dans un véhicule, tel qu'un camion ou une camionnette.

Conformément à un mode de réalisation préféré de l'invention, le dispositif de réparation comporte, en outre, un élément racleur 25 cylindrique supplémentaire, pourvu d'au moins deux anneaux gonflables 26 et pouvant être rattaché à l'ensemble d'éléments gonflables 1 à 4 par l'intermédiaire d'une entretoise articulée 5, ou être mis en oeuvre séparément par traction à travers le conduit ou la canalisation 10 colmatée, après extraction complète dudit ensemble d'éléments gonflables 1 à 4.

Comme le montre la figure 1E des dessins annexés, l'élément racleur 25 peut comporter de manière avantageuse, deux anneaux gonflables 26, , recouverts, sur leur face externe, par une couche de renforcement 27 et montés, avec interposition, le cas échéant, de bagues 28 d'épaisseurs variables, sur un tube creux rigide 29 en étant maintenus, latéralement et axialement, par des flasques correspondants 30, fixés de manière amovible sur ledit tube rigide 29.

Lorsque ledit élément racleur 25 est mis en oeuvre indépendamment, il est tracté à travers le tronçon de conduit ou de canalisation 11 colmaté éventuellement en effectuant des va-et-vient au moyen d'un ou de deux câbles de tirage fixés au niveau d'attaches 31 rapportées sur les extrémités du tube creux 29, ce afin de lisser la paroi avant séchage complet du produit colmatant 7′.

Selon une autre caractéristique de l'invention, représentée aux figures 1A, 1D et 1E des dessins annexés, le dispositif de contrôle de positionnement et d'inspection se présente préférentiellement sous la forme, d'une part, de caméras 32 de faible dimension, disposées sur les éléments extrêmes 1 et 4 de l'ensemble d'éléments gonflables 1, 2, 3, 4 et, le cas échéant, sur l'élément racleur 25, et, d'autre part, d'écrans de visualisation et de dispositifs de traitement placés en surface, ledit dispositif permettant une mise en place exacte de la chambre d'injection 10 au niveau des défauts d'étanchéité de grandes dimensions et le contrôle, après colmatage, des portions traitées.

Conformément à une caractéristique supplémentaire de l'invention, et comme le montre la figure 10 des dessins annexés, le dispositif de mesure de la pression du produit colmatant 7′ au niveau de la chambre d'injection 10, est composé d'un capteur de pression 33 et de moyens d'évaluation disposés à la surface : auxquels ledit capteur de pression 33 est relié, ledit dispositif de mesure relevant de manière précise la pression exercée sur la paroi du conduit de la canalisation 11, empêchant ainsi son éclatement.

L'interconnexion des caméras 32 et du capteur de pression 33 avec les systèmes de mesures et d'exploitation correspondants disposés à la surface, s'effectue au moyen de fils de liaison 34 traversant les éléments gonflables 1, 2, 3 ou 4 interposés au niveau d'un de leurs tuyaux rigides 16.

L'invention a également pour objet un procédé de réhabilitation de conduits ou de canalisations 11 non visitables, mettant en oeuvre le dispositif de réparation décrit ci-dessus, procédé caractérisé en ce qu'il consiste, tout d'abord, à explorer au moyen d'une caméra, le conduit ou la canalisation 11, ou la portion de conduit ou de canalisation, à traiter, en relevant topographiquement les défauts d'étanchéité majeurs et en disposant des obturateurs 35 dans les ouvertures des embouchures 14 des conduits de canalisations secondaires débouchant dans ledit conduit ou ladite canalisation 11 à traiter, par l'intermédiaire d'un bras manipulateur rapporté sur l'avant de ladite caméra, puis à introduire le dispositif de réparation par l'unique regard au moins présent et à déplacer ledit dispositif de réparation dans la portion de conduit ou de canalisation 11 à traiter, en marquant des temps d'arrêt suffisants au niveau des défauts majeurs relevés précédemment, la chambre d'injection 10 étant continuellement remplie de produit colmatant 7′ au cours de la progression en phase de réparation dudit dispositif de traitement, permettant ainsi de colmater en continu ledit conduit ou ladite canalisation, et par conséquent, de réparer également les défauts d'étanchéité non visibles et non détectés préalablement.

La phase de réparation peut débuter, la chambre d'injection 10 étant remplie, soit dès l'introduction du dispositif dans le conduit ou la canalisation 11 par un premier regard, en le tractant au moyen d'un câble de tirage 9 vers un second regard, soit, dans le cas d'un conduit ou d'une canalisation 11 ne comportant qu'un seul regard, après mise en place dudit dispositif à l'extrémité du conduit ou de la canalisation 11, opposée audit regard, en le tractant vers l'arrière, par l'intermédiaire d'un câble de tirage 9, en direction dudit regard.

Le produit colmatant 7′ utilisé peut avantageusement se présenter sous la forme d'un mortier prêt à gâcher, thixotropique, et résistant à l'eau, à l'état frais tout comme à l'état durci.

Comme le montrent avantageusement les figures 2A à 2D des dessins annexés, le passage d'un obstacle par ledit ensemble d'éléments gonflables 1 à 4 peut s'effectuer de manière simple, en conservant la chambre d'injection 10 pleine et sans entraîner d'épanchement de produit colmatant 7′ dans le conduit ou la canalisation 11, par la commande successive, en vue de leur dégonflage partiel, des éléments gonflables 1 à 4, lors de leur passage au niveau de l'obstacle protubérant (déboîtement 12).

Grâce à l'invention, il est donc possible de réaliser un dispositif de réparation in situ de conduits ou de canalisations 11 non visitables de l'intérieur, permettant de colmater, par une application continue de produit colmatant 7′ contre la paroi, l'ensemble des défauts d'étanchéité, apparents ou non, ce également pour un conduit ou une canalisation 11 ne comportant qu'un seul regard ou accès.

En outre, du fait de sa constitution articulée, il peut également être mis en oeuvre au niveau de coudes 12 ou d'angles.

De plus, la structure des éléments gonflables 1 à 4 et leur mode d'assemblage, permet d'adapter aisément ledit dispositif de réparation à des conduits ou des canalisations 11 de diamètres différents, tout en autorisant également un réglage de la longueur de la chambre d'injection 10 en fonction des dimensions, dans le sens longitudinal des conduits ou canalisations 11, des défauts d'étanchéité à réparer, par simple changement de l'entretoise articulée 5 correspondante.

Par ailleurs, la chambre d'injection 10 étant en permanence remplie de produit colmatant 7′ sous pression, ledit dispositif de réparation peut également réhabiliter des conduits ou des canalisations 11 subissant des infiltrations d'eau provenant de la nappe phréatique.

En effet, ladite chambre d'injection 10 étant pleine, l'eau présente dans le conduit ou la canalisation 11 et l'eau tentant de s'infiltrer au niveau de cette chambre d'injection est repoussée, par contre le produit colmatant 7′ s'échappe par les défauts d'étanchéité servant aux infiltrations et empêche l'entrée de l'eau dès son application, avant même qu'il ne durcisse.

## Revendications

1. Dispositif de réparation in situ de conduits ou de canalisations non visitables, avec accès unique ou multiple, destiné à appliquer un produit colmatant sur la paroi interne du conduit ou de la canalisation à réparer et comprenant un ensemble d'éléments gonflables pouvant délimiter une chambre d'injection, des moyens d'amenée de fluide de gonflage et de produit colmatant des moyens de traction et/ou de rétraction et des dispositifs d'injection et d'actionnement disposés en surface et reliés, respectivement, par des moyens d'amenée (7, 8) de fluide de gonflage et de produit colmatant (7′) sous pression, ainsi que par des moyens (9) de traction et/ou de rétraction, audit ensemble d'éléments, caractérisé en ce qu'il est constitué, d'une part, par un ensemble d'au moins quatre éléments (1, 2, 3, 4) cylindriques gonflables, de faibles longueurs, assemblés entre eux par des entretoises (5) articulées au moyen de joints de cardan (6), d'autre part, par des dispositifs de contrôle et de mesure, ledit ensemble d'éléments (1, 2, 3, 4) permettant de délimiter, entre deux de ses éléments, une chambre d'injection (10) permanente de produit colmatant (7′) sous pression dans le conduit ou la canalisation (11), autorisant la réparation complète en continu dudit conduit ou de ladite canalisation (11) au cours de la progression dudit ensemble, ce également, le cas échéant, au niveau de déboîtements (12), de protubérances internes (13), d'embouchures de canalisations secondaires (14) ou de coudes (12′), en conservant la chambre d'injection (10) pleine de produit colmatant (7′), les moyens d'amenée (7) de ce dernier étant connectés au niveau de l'élément arrière (4) dudit ensemble d'éléments (1, 2, 3 et 4).

2. Dispositif de réparation selon la revendication 1, caractérisé en ce que les éléments gonflables (1, 2, 3, 4), de constitutions similaires, sont principalement composés d'un corps support (15) tubulaire dans lequel sont disposés, de manière fixe, plusieurs tuyaux rigides (16) saillant aux deux extrémités dudit corps support (15), ce dernier étant enveloppé d'un manchon annulaire gonflable (17), muni sur sa face externe de rondelles (18) radiales périphériques, et maintenu axialement par l'intermédiaire de deux flasques latéraux (19, 19′), montés sur les extrémités saillantes des tuyaux rigides (16) et assujettis au moyen de pièces de fixation (20) amovibles.

3. Dispositif de réparation selon la revendication 2, caractérisé en ce que les entretoises articulées (5), de longueurs variables, sont fixées de manière amovible sur les flasques (19, 19′) en regard des éléments gonflables (1, 2, 3 et 4) à interconnecteur, les flasques extérieurs (19 et 19′) des éléments extrêmes (1 et 4) étant pourvues d'attaches (20) pour la fixation du câble (9) ou de la chaîne de traction ou de rétraction.

4. Dispositif de réparation selon l'une quelconque des revendications 2 et 3, caractérisé en ce que les moyens d'amenée (8) de fluide de gonflage se présentent sous la forme de conduits flexibles, raccordés à un dispositif compresseur placé en surface, alimentant, de manière indépendante, chacun des quatre éléments gonflables (1, 2, 3, 4), les moyens d'amenée (7) de produit colmatant (7′), préparé à la surface et prêt à l'emploi, étant constitués par un flexible semi-rigide (22) connecté au moyen d'un raccord rapide (23) à un tuyau rigide (16) correspondant de l'élément gonflable arrière (4), le transfert final du produit colmateur (7′) dans la chambre d'injection (10) s'effectuant consécutivement à travers un flexible de raccordement (24) et un tuyau rigide (16) de l'un des éléments gonflables intermédiaires (2 ou 3), délimitant ladite chambre d'injection (10).

5. Dispositif de réparation selon l'une quelconque des revendications 1 à 4, caractérisé en ce qu'il comporte un élément racleur (25) cylindrique supplémentaire, pourvu d'au moins deux anneaux gonflables (26) et pouvant être rattaché à l'ensemble d'éléments gonflables (1 à 4) par l'intermédiaire d'une entretoise articulée (5), ou être mis en oeuvre séparément par traction à travers le conduit ou la canalisation (10) colmatée, après extraction complète dudit ensemble d'éléments gonflables (1 à 4).

6. Dispositif de réparation selon la revendication 5, caractérisé en ce que l'élément racleur (25) comporte deux anneaux gonflables (26), recouverts, sur leur face externe, par une couche de renforcement (27) et montés, avec interposition, le cas échéant, de bagues (28) d'épaisseurs variables, sur un tube creux rigide (29) en étant maintenus, latéralement et axialement, par des flasques correspondants (30), fixés de manière amovible sur ledit tube rigide (29).

7. Dispositif de réparation selon l'une quelconque des revendications 1 à 6, caractérisé en ce que le dispositif de contrôle de positionnement et d'inspection se présente préférentiellement sous la forme, d'une part, de caméras (32) de faible dimension, disposés sur les éléments extrêmes (1 et 4) de l'ensemble d'éléments gonflables (1, 2, 3, 4) et, le cas échéant, sur l'élément racleur (25), et, d'autre part, d'écrans de visualisation et de dispositifs de traitement placés en surface.

8. Dispositif de réparation selon l'une quelconque des revendications 1 à 7, caractérisé en ce que le dispositif de mesure de la pression du produit colmatant (7′) au niveau de la chambre d'injection (10), est composé d'un capteur de pression (33) et de moyens d'évaluation disposés à la surface, auxquels ledit capteur de pression (33) est relié.

9. Procédé de réhabilitation in situ de conduits ou de canalisations non visitables, mettant en oeuvre le dispositif de réparation selon l'une quelconque des revendications 1 à 8, caractérisé en ce qu'il consiste tout d'abord à explorer au moyen d'une caméra, le conduit ou la canalisation (11), ou la portion de conduit ou de canalisation, à traiter, en relevant topographiquement les défauts d'étanchéité majeurs et en disposant des obturateurs (35) dans les ouvertures des embouchures (14) des conduits de canalisations secondaires débouchant dans ledit conduit ou ladite canalisation (11) à traiter, par l'intermédiaire d'un bras manipulateur rapporté sur l'avant de ladite caméra, puis à introduire le dispositif de réparation par l'unique regard au moins présent et à déplacer ledit dispositif de réparation dans la portion de conduit ou de canalisation (11) à traiter, en marquant des temps d'arrêt suffisants au niveau des défauts majeurs relevés précédemment, la chambre d'injection (10) étant continuellement remplie de produit colmatant (7′) au cours de la progression en phase de réparation dudit dispositif de traitement.

## Patentansprüche

1. Vorrichtung zur In-situ-Sanierung von nicht begehbaren Leitungen oder Kanälen mit einem oder mehreren Zugängen zum Aufbringen einer Schlämme auf die Innenwand der zu reparierenden Leitung oder des zu reparierenden Kanals mit einer Anordnung von aufblähbaren Elementen, welche geeignet sind, eine Injektionskammer abzugrenzen, mit Mitteln zum Zuführen von Fluid zum Aufblähen sowie von Schlämme, mit Zug- und/oder Rückzugmitteln sowie mit Injektions- und Betätigungseinrichtungen, welche jeweils an der Oberfläche angeordnet und über Mittel zum Zuführen von Fluid zum Aufblähen sowie von unter Druck stehender Schlämme sowie über Zug- und/ oder Rückzugmittel mit der genannten Anordnung von Elementen verbunden sind, dadurch gekennzeichnet, daß die Vorrichtung einerseits aus einer Anordnung von wenigstens vier aufblähbaren zylindrischen Elementen (1, 2, 3, 4) geringer Längen besteht, welche untereinander durch Gelenkstangen (5) mittels Kardangelenken verbunden sind und daß die Vorrichtung andererseits besteht aus Kontroll- und Meßvorrichtungen, wobei es die Anordnung der Elemente (1, 2, 3, 4) erlaubt, in der Leitung oder dem Kanal (11) zwischen zwei ihrer Elemente eine Injektionskammer (10) für unter Druck stehende Schlämme (7′) auf Dauer abzugrenzen, wodurch die vollständige kontinuierliche Sanierung der Leitung oder des Kanals (11) während der Vorwärtsbewegung der Anordnung gegebenenfalls auch auf Höhe von Ausbuchtungen (12), nach innen gerichteten Vorsprüngen (13), Einmündungen von Nebenkanälen (14) oder Krümmungen (12′), ermöglicht wird, indem die Injektionskammer (10) mit Schlämme (7′) gefüllt gehalten wird, wobei die Mittel zum Zuführen (7) für letztere auf Höhe des hinteren Elements (4) der Anordnung von Elementen (1, 2, 3, 4) angeschlossen sind.

2. Vorrichtung nach Anspruch 1, dadurch gekennzeichnet, daß die ähnlich aufgebauten aufblähbaren Elemente (1, 2, 3, 4) im wesentlichen aus einem rohrartigen Tragkörper (15) bestehen, in dem mehrere starre und an den beiden Enden des Tragkörpers (15) überstehende Rohre (16) fest angeordnet sind, wobei der Tragkörper (15) von einer ringartigen aufblähbaren Manschette (17) umfaßt wird, die auf ihrer Außenseite radiale Umfangringe (18) aufweist und in axialer Richtung mittels zweier seitlicher Flansche (19, 19′) gehalten wird, die auf den überstehenden Enden der starren Rohre (16) angebracht und mittels lösbarer Befestigungsteile (20) befestigt sind.

3. Vorrichtung nach Anspruch 2, dadurch gekennzeichnet, daß die Gelenkstangen (5) variabler Längen an den Flanschen (19, 19′) gegenüberliegender aufblähbarer Elemente (1, 2, 3, 4) lösbar angebracht sind, wobei die äußeren Flansche (19, 19′) der außenliegenden Elemente (1, 4) mit Befestigungen (20) für das Zug- oder Rückzugseil (9) oder die Zug- oder Rückzugkette versehen sind.

4. Vorrichtung nach einem der Ansprüche 2 oder 3, dadurch gekennzeichnet, daß als Mittel zum Zuführen (8) von Fluid zum Aufblähen flexible Leitungen vorgesehen sind, die mit einem an der Oberfläche angeordneten Druckerzeuger verbunden sind, der die vier aufblähbaren Elemente (1, 2, 3, 4) unabhängig voneinander versorgt, daß die Mittel zum Zuführen (7) der an der Oberfläche hergestellten und gebrauchsfähigen Schlämme (7′) einen flexiblen halbstarren Verbinder (22) aufweisen, der mittels einer Schnellverbindung (23) mit einem starren, dem hinteren aufblähbaren Element (4) zugeordneten Rohr (16) verbunden ist, wobei der abschließende Transport der Schlämme (7′) in die Injektionskammer (10) durch ein flexibles Verbindungsstück (24) und ein diesem nachgeschaltetes starres Rohr (16) eines der mittleren, die Injektionskammer begrenzenden aufblähbaren Elemente (2, 3) erfolgt.

5. Vorrichtung nach einem der Ansprüche 1 bis 4, dadurch gekennzeichnet, daß die Vorrichtung zusätzlich einen mit wenigstens zwei aufblähbaren Ringen (26) versehenen zylindrischen Abstreifer (25) umfaßt, der mittels einer Gelenkstange (5) an der Anordnung der aufblähbaren Elemente (1 bis 4) angebracht werden kann oder der getrennt durch die eingeschlämmte Leitung oder den eingeschlämmten Kanal (10) gezogen werden kann, nachdem zuvor die Anordnung der aufblähbaren Elemente (1 bis 4) vollständig aus der Leitung oder aus dem Kanal (10) herausgezogen worden ist.

6. Vorrichtung nach Anspruch 5, dadurch gekennzeichnet, daß der Abstreifer (25) zwei aufblähbare Ringe (26) aufweist, die auf ihrer Außenseite durch eine verstärkende Schicht (27) bedeckt sind und die gegebenenfalls unter Zwischenschaltung variabler Dichtringe (28) auf einem starren Rohr (29) angebracht sind und dort seitlich und in axialer Richtung durch entsprechende Flansche (30) gehalten werden, die lösbar an dem starren Rohr (29) angebracht sind.

7. Vorrichtung nach einem der Ansprüche 1 bis 6, dadurch gekennzeichnet, daß als Vorrichtung zur Lagekontrolle und überwachung vorzugsweise einerseits kleindimensionierte und auf den außenliegenden Elementen (1, 4) der Anordnung aus aufblähbaren Elementen (1, 2, 3, 4) und gegebenenfalls auf dem Abstreifer (25) angeordnete Kameras (32) und andererseits an der Oberfläche angeordnete Bildschirme und Bedienungsvorrichtungen vorgesehen sind.

8. Vorrichtung nach einem der Ansprüche 1 bis 7, dadurch gekennzeichnet, daß die Vorrichtung zum Messen des Druckes der Schlämme (7′) auf Höhe der Injektionskammer (10) zusammengesetzt ist, aus einem Druckfühler (33) und an der Oberfläche angeordneten Auswerteeinrichtungen, mit denen der Druckfühler (33) verbunden ist.

9. Verfahren zur In-situ-Sanierung von nicht begehbaren Leitungen oder Kanälen unter Einsatz der Vorrichtung nach einem der Ansprüche 1 bis 8, dadurch gekennzeichnet, daß zunächst die zu behandelnde Leitung oder der zu behandelnde Kanal (11) oder der zu behandelnde Teil der betreffenden Leitung oder des betreffenden Kanals mittels einer Kamera erkundet wird und dabei die Hauptundichtigkeiten topographisch erfaßt werden und mittels eines an der Vorderseite der Kamera mitgeführten Manipulatorarmes Verschlüsse (35) in die Mündungsöffnungen (14) von in die zu behandelnde Leitung oder den zu behandelnden Kanal (11) mündenden Nebenkanälen eingesetzt werden, daß danach die Reparaturvorrichtung durch den wenigstens vorhandenen einen Zugang eingeführt und in den zu behandelnden Teil der Leitung oder des Kanals (11) verbracht wird, wobei ausreichende Verweilzeiten im Bereich der zuvor ermittelten Hauptundichtigkeiten eingehalten werden und die Injektionskammer (10) während der Vorwärtsbewegung im Reparaturbetrieb über die Bedienungseinrichtung ständig mit Schlämme (7′) befüllt wird.

## Claims

1. Device for the on-site repair of non-visitable conduits or ducts with single or multiple access, intended for the application of a sealant to the internal wall of the conduit or duct to be repaired and comprising an assembly of inflatable elements capable of defining an injection chamber, means for the supply of inflating fluid and of sealant, traction and/or retraction means and injection and actuation devices arranged at the surface and respectively connected by means (7, 8) for the supply of inflating fluid and sealant (7′) under pressure and by traction and/or retraction means (9) to said assembly of elements, characterised in that it consists, on the one hand, of an assembly of at least four inflatable cylindrical elements (1, 2, 3, 4) of small lengths and attached to one another by cross members (5) articulated by universal joints (6) and, on the other hand, by monitoring and measuring devices, said assembly of elements (1, 2, 3, 4) defining, between two of its elements, a chamber (10) for the continuous injection of sealant (7′) under pressure into the conduit or duct (11), allowing the continuous complete repair of said conduit or said duct (11) during the progression of said assembly, if necessary even in the region of dislocations (12), internal projections (13), orifices of secondary ducts (14) or elbows (12′), while keeping the injection chamber (10) full of sealant (7′), the means (7) for the supply thereof being connected in the region of the rear element (4) of said assembly of elements (1, 2, 3, 4).

2. Repair device according to Claim 1, characterised in that the inflatable elements (1, 2, 3, 4), of similar constitutions, are mainly composed of a tubular supporting body (15) in which there are stationarily arranged several rigid pipes (16) projecting at the two ends of said supporting body (15), the supporting body (15) being surrounded by an inflatable annular sleeve (17) equipped on its external face with peripheral radial washers (18) and held axially by means of two lateral plates (19, 19′) mounted on the projecting ends of the rigid pipes (16) and fastened by means of removable fixing members (20).

3. Repair device according to Claim 2, characterised in that the articulated cross members (5) of variable lengths are removably fixed on the plates (19, 19′) opposite the inflatable elements (1, 2, 3 and 4) to be interconnected, the external plates (19 and 19′) of the extreme elements (1 and 4) being provided with fasteners (20) for fixing the traction or retraction cable (9) or chain.

4. Repair device according to any one of Claims 2 and 3, characterised in that the means (8) for the supply of inflating fluid assume the form of flexible conduits coupled to a surface-mounted compressor device independently supplying each of the four inflatable elements (1, 2, 3, 4), the means (7) for the supply of sealant (7′), prepared at the surface and ready for use, consisting of a semi-rigid flexible hose (22) connected by means of a quick-release coupling (23) to a corresponding rigid pipe (16) of the rear inflatable element (4), the final transfer of the sealant (7′) into the injection chamber (10) taking place successively through a flexible coupling hose (24) and a rigid pipe (16) of one of the intermediate inflatable elements (2 or 3) defining said injection chamber (10).

5. Repair device according to any one of Claims 1 to 4 characterized in that it comprises an additional cylindrical scraper element (25) provided with at least two inflatable rings (26) and being able to be attached to the assembly of inflatable elements (1 to 4) by means of an articulated cross member (5) or to be employed separately by traction through the sealed conduit or duct (10) after complete extraction of said assembly of inflatable elements (1 to 4).

6. Repair device according to Claim 5, characterised in that the scraper element (25) comprises two inflatable rings (26) covered, on their external face, by a reinforcing layer (27) and mounted with interposition, if necessary, of rings (28) of variable thicknesses on a rigid hollow tube (29) while being held laterally and axially by corresponding plates (30) removably fixed on said rigid tube (29).

7. Repair device according to any one of Claims 1 to 6, characterised in that the position monitoring and inspection device preferably assumes the form, on the one hand, of small-sized cameras (32) arranged on the extreme elements (1 and 4) of the assembly of inflatable elements (1, 2, 3, 4) and, if necessary, on the scraper element (25) and, on the other hand, of surface-mounted display screens and processing devices.

8. Repair device according to any one of Claims 1 to 7, characterised in that the device for measuring the pressure of the sealant (7′) in the region of the injection chamber (10) is composed of a pressure sensor (33) and surface-mounted evaluation means to which said pressure sensor (33) is connected.

9. Process for the on-site rehabilitation of non-visitable conduits or ducts employing the repair device according to any one of Claims 1 to 8, characterised in that it firstly involves exploring the conduit or the duct (11) or the portion of conduit or duct to be treated, using a camera, topographically determining the major sealing defects and arranging seals (35) in the apertures of the orifices (14) of the secondary ducting conduits emerging in said conduit or said duct (11) to be treated by means of a manipulating arm added to the front of said camera, then introducing the repair device through the at least single inspection hole provided and displacing said repair device in the portion of conduit or duct (11) to be treated, noting adequate stoppage times in the region of the previously determined major defects, the injection chamber (10) being continually filled with sealant (7′) during the progression of said processing device in the repair phase.
